# EUROPEAN PATENT SPECIFICATION

(11) **EP 2 857 181 B1**
(45) Date of publication and mention of the grant of the patent: **12.08.2020**
(21) Application number: 14187676.3
(22) Date of filing: 03.10.2014
(51) Int. Cl.: B29C 70/44, B29C 70/48, B29C 70/54, B29C 70/08

(54) **Variable matrix composite**
Verbundwerkstoff mit variablem Bindemittel
Composite à matrice variable

(30) Priority: 04.10.2013 US 201314046375
(43) Date of publication of application: 08.04.2015
(73) Proprietor: Rohr, Inc., Chula Vista, CA 91910-2098 (US)
(72) Inventor: Duncan, Jeffrey Allen, Jacksonville, Florida 32225 (US); Hudson, Donald Rodger, Jacksonville, Florida 32225 (US)
(74) Representative: Dehns

(56) References cited:
- EP-A1- 2 620 265
- WO-A1-2010/040359
- US-A- 6 048 488
- US-A1- 2008 305 340

## Description

### FIELD

The present disclosure relates to the use of composite materials, and more particularly, to variable properties associated with composite materials.

### BACKGROUND

Composite materials (sometimes referred to as composition materials or "composites") are materials made from two or more constituent materials with significantly different physical or chemical properties, that when combined, produce a material with characteristics different from the individual components. Composites may be made to enhance or exploit desirable characteristics of a material. For instance, composites may be stronger, lighter or less expensive when compared to traditional and/or constituent materials.

Typically, most common polymer-based composite materials (including fiberglass, carbon fiber, and Kevlar) include at least two parts, namely the substrate and the resin. In the aerospace industry, epoxy is typically used as a structural matrix material or as structural glue.

A prior art method of making a composite structure with the features of the preamble to claim 1 is disclosed in US 2008/305340. Other prior art methods of making a composite structure are disclosed in WO 2010/040359 and EP 2 620 265.

### SUMMARY

The present invention provides a method of making a composite structure in accordance with claim 1.

The transition region may be at least one of located adjacent to a vacuum line location and located between the first composite material and the second composite material.

The transition region, the first composite material and the second composite material may each comprise different composite material characteristics.

A location of the first vacuum line may be configured to produce a single knit line of the first resin and the second resin.

A location of the first vacuum line may be internal to a stack of plies. The first section of plies may be a top section disposed above the first vacuum line, and the second section of plies may be a bottom section disposed below the first vacuum line.

The transition region, the first composite material and the second composite material may be formed in a single vacuum assisted resin transfer molding process.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 depicts a composite structure formed using processes in accordance with various embodiments;
FIG. 2 illustrates a composite material being formed using more than one resin in accordance with various embodiments;
FIG. 3 illustrates a flow chart for creating a composite material being formed using more than one resin in accordance with various embodiments;
FIG. 4 illustrates a flow chart for creating a composite material being formed using more than one resin with localized disbursement in accordance with various embodiments;
FIG. 5 illustrates a flow chart for creating a composite material being formed using an interstitial ply in accordance with various embodiments; and
FIG. 6 illustrates a flow chart for creating a composite material utilizing a diffusion media weave in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the inventions, it should be understood that other embodiments may be realized and that logical, chemical and mechanical changes may be made without departing from the scope of the inventions. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

The present disclosure may refer to composite materials and/or aircraft components. It is often desired for a composite component to have varying properties throughout the component. Varying the number of plies, fiber volume, fiber material, resin, fiber orientation, and/or style of the fabric used in a composite material may result in a composite structure comprising varying properties in localized areas. A method for fabricating a composite component with varying properties along its length, through its thickness, radially, and/or in isolated areas is disclosed herein. The embodiments disclosed herein may be used with Vacuum Assisted Resin Transfer Molding ("VARTM"), Resin Film Infusion ("RFI"), or PreImpregnated Fabric ("Pre-Preg").

According to various embodiments, using a VARTM process, resin infused in a composite is formulated differently for different areas of the component. Traditionally, a single resin is used in a composite. Alternatively, if two or more resins are utilized, they are mixed prior to applying to fibers or plies of material.

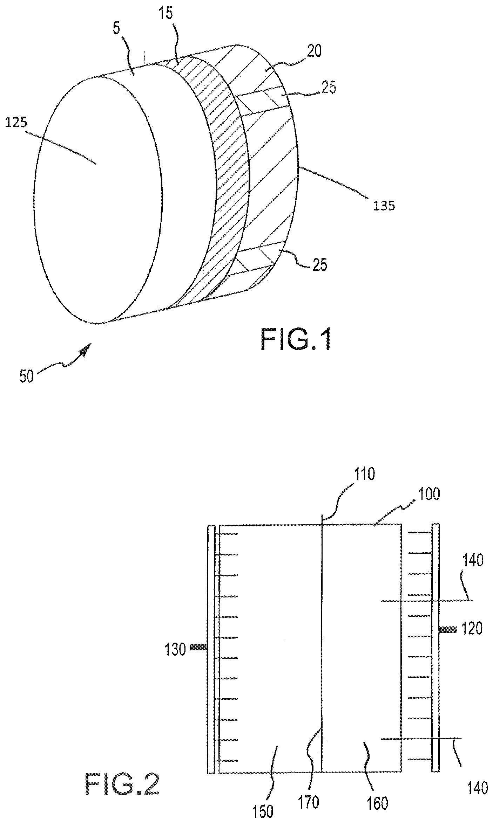

According to various embodiments, and with reference to FIGS. 1 and 2, two or more different resins 5, 20, 25 may be formulated and applied to/in a composite 50 fabrication, such that where the first resin 5 and the second resin 20 meet; the interface forms a transition region 15. For instance, two or more resins 5, 20, 25 may be infused from different locations/sources. In response to the first resin 5 infusing throughout the mold 100 (such as through input 120), the portion 160 being treated with the first resin 5 may achieve properties associated with that resin (e.g. first resin 5). In response to the second resin 20 being infused throughout the mold 100 (such as through input 130), the portion 150 being treated with the second resin 20 may achieve properties associated with that resin (e.g. first resin 20). A vacuum line port (e.g., vacuum line port 110) may draw resin through inputs 120 and 130 substantially simultaneously. There may be more than one vacuum line port disposed along and/or in close proximity to common vacuum line 170 and/or within the mold 100. Localized vacuum ports 140 may draw resin 5, 20, 25 (described in further detail below) to specific areas/locations on/in the composite structure. This may encourage even distribution of resin 5, 20 over portions 160, 150 respectively and/or at the interface of portions 160, 150.

For example, and with continued reference to FIG. 1, resin A could be a resin 5, such as a Difunctional BPF epoxy resins, like EPON 862, with JEFFAMINE D-250 curing agent infused from one end of a flat panel, such as side 125. Resin B could be a resin 20, such as EPON 862, with a curing agent infused from the other end of the flat panel, such as side 135. The two resins may meet, such as along/at a common vacuum line 170 disposed along the mold 100. Resin A and Resin B may intermingle as the infusion completes. This flat panel would have different glass transition temperature along its length with the EPON 862/Jeffamine property on one end (proximate side 125), the EPON 862/W property on the other (proximate side 135) and some transition region in the middle (proximate common vacuum line 170) where the two resins intermingle. Many different processing tools could be used to make this transition region more or less abrupt.

To make the transition region (an area proximate common vacuum line 170) more abrupt, a single vacuum point could be configured to allow for a single knit line for the two resins (as mentioned above). To make the transition region less abrupt, several methods may be used.

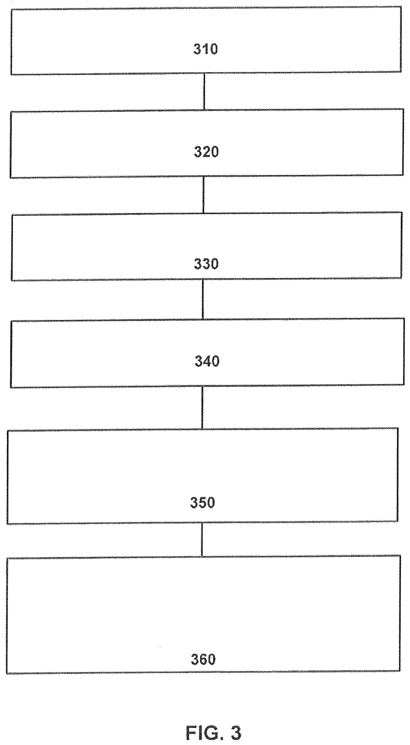

According to various embodiments, and with reference to FIGS. 2 and 3, fibers may be positioned in stacks in a mold 100, and this mold 100 may be a VARTM mold (Step 310). A first resin source, such as resin 5 source, may be coupled to an input, such as input 120 (Step 320). A second resin source, such as resin 20 source, may be coupled to an input, such as input 130 (Step 330). The vacuum line, such as vacuum line 110 coupled to common vacuum line 170, may be engaged (Step 340). The pressure created by the vacuum line 110 may draw the resin 5, 20 toward the common vacuum line 170 (Step 350). A composite may be formed in a single mold process where portion 150 may comprise first material characteristics, portion 160 may comprise second material characteristics, and a transition region may comprise third material characteristics (Step 360).

More than one vacuum line may be utilized to draw resin to desired areas. For instance, where one resin is infused to the far side of the transition region and then a second resin is infused from an opposite end through the transition region to a second vacuum line, as the second resin flows through the first resin toward the second vacuum line the first resin and the second resin may intermix. This less abrupt transition could be designed using more or fewer secondary vacuum lines to increase or decrease the intermingling.

According to various embodiments, VARTM may be utilized to infuse localized alterations in resin properties. For example, a secondary resin infusion point may be configured to locally achieve a different physical property than achieved with the first resin" or other words to note a different physical property (which may be, where desired, a decrease in the value of a physical property such as brittleness). For instance, toughness may be increased in a curved mounting section of a part using this process, while not having the toughness in another area of a part. The localized resin infusion points in the areas that toughness is desired, as resin is infused into the part, these areas may be infused with a higher viscosity compatible base resin. In response to the base resin infusing around the localized area, the edges intermingle, but because of the design of the vacuum lines and/or the variation in viscosity, the base resin system would pass the localized area, without washing out the localized variation.

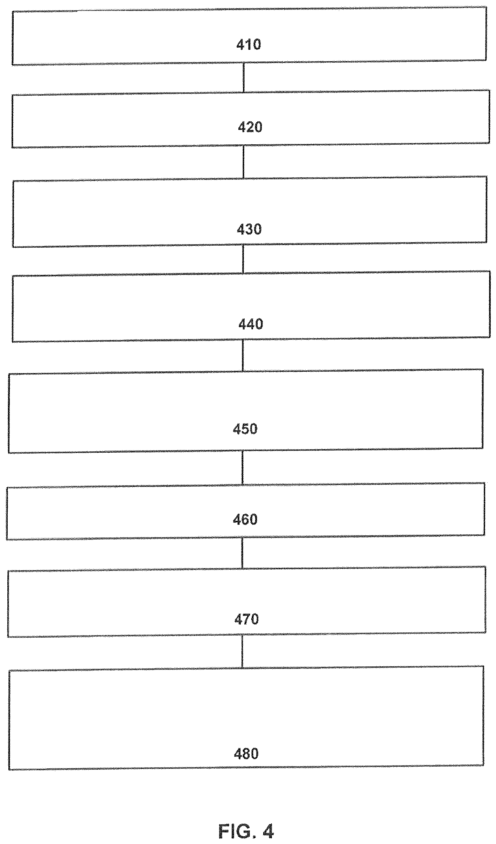

According to various embodiments, and with reference to FIG. 4, fibers may be oriented in a mold 100, and this mold 100 may be a VARTM mold (Step 410). A first resin source, such as resin 5 source, may be coupled to an input, such as input 120 (Step 420). A second resin source, such as resin 20 source, may be coupled to an input, such as input 130 (Step 430). One or more vacuum lines may be positioned to draw resin 5 and/or resin 20 to a desired portion of the composite structure (Step 450). The portion may be the entire formed composite structure, a portion of the composite structure 150, 160 or a specific section of a portion such as an attachment point or curved surface. The one or more vacuum lines may be engaged (Step 450). This engagement may be staged for desired flow and volume through input 120 and/or input 130. The pressure created by the vacuum line may draw the resin 5, 20 toward the one or more vacuum line (Step 470). A composite may be formed in a single mold process, wherein a first portion of the part may comprise first material characteristics, a second portion/region of the part may comprise second material characteristics, and a transition region generally around the second region may comprise third material characteristics (Step 480).

Axial toughness bands on a radial composite structure are also infused using this process. Axial toughness may be a composite material characteristic. These axial toughness bands are used to reduce crack propagation in a composite structure. With renewed reference to FIG. 1, a third resin 25 is selectively drawn from a third resin 25 source to be drawn by dedicated vacuum ports to desired locations. This may be desirable because the viscosity of a toughened system may prevent the use of a VARTM process. The axial bands may also provide sufficient crack mitigation to allow VARTM to be utilized as a viable process. Further, the variation in toughness may be desired for impact absorption and damage tolerance in the same part.

According to various embodiments, VARTM may be utilized with a ply of diffusion media within the lay-up of the part to alter through thickness properties. Thus, resin may be infused from one or both surfaces, (such as a top or bottom) of a part with an interstitial ply being used as the vacuum source. Resin A may be infused from the top surface, resin B may be infused from the bottom surface and a vacuum port may be applied to a layer placed within the thickness of the lay-up. Composite material characteristics may comprise toughness, plasticity, strength, weight and/or the like.

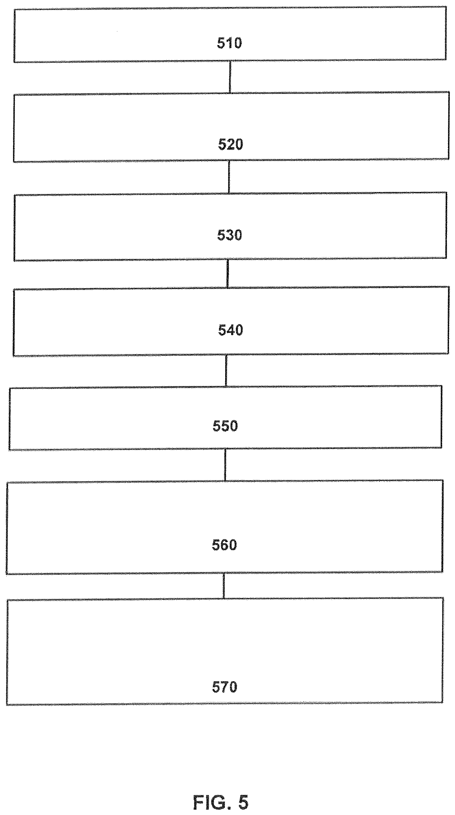

According to various embodiments, and with reference to FIG. 5, fibers may be oriented in a mold 100. This mold 100 may be a VARTM mold (Step 510). An interstitial/embedded vacuum line may be oriented within/internal to the ply stack (Step 520). Stated another way, a first section of plies may form a top section disposed above a vacuum line, and a second section of plies may form a bottom section disposed below the vacuum line. A first resin source, such as resin 5 source, may be coupled to an input, such as input 120 (Step 530). A second resin source, such as resin 20 source, may be coupled to an input, such as input 130 (Step 540). One or more vacuum lines may be positioned to draw resin 5 and/or resin 20 to a desired portion of the part 100, such as by positioning the vacuum line integral the ply stack. For instance, positioned between a top surface and a bottom surface of the ply stack. The vacuum may be engaged (Step 550). The pressure created by the vacuum line may draw the resin 5, 20 toward the one or more vacuum line port integral to the stack (Step 560). A composite may be formed in a single mold process where a top portion of the part may comprise first material characteristics, a second portion of the part, bottom portion, may comprise second material characteristics, and a transition region, generally between the top portion and the bottom portion may comprise third material characteristics (Step 570).

The transition from a first resin to a second resin may be made more or less abrupt. Further, the interstitial ply being used as a vacuum media could be made of a varying material which would create a third layer of properties (further described below).

According to various embodiments, a stitched, woven, or braided fabric which has fibers that vary in a particular location may be utilized to achieve localized material characteristics. For example, a weave, stitch, or braid of fiber (which is itself a carrier of a material) that alters the properties of the resin, in response to being combined with the resin. For example, a fiber (which would thermally or chemically dissolve in the presence of the resin or heat, and become either an interstitial element or chemically reactive element in the final polymerization of the resin) may change the properties of the composite in the local region. For instance, a toughened epoxy resin like Cytec Industries PRI-FORM, interlaminar thermoplastics, and powder forms of rubber toughening, may be utilized within a weave at a localized area to achieve localized toughening. Stated another way, this material is not utilized globally within the part, but only in desired locations to change the properties or to isolate the affect to a limited region, to create a nonhomogeneous material property.

According to various embodiments, an interstitial ply of a material is disclosed which would thermally or chemically dissolve in the presence of the resin or heat and become either an interstitial or chemically reactive element in the final polymerization of the resin. Similar to embodiments previously disclosed, this method may use an interstitial ply. Resin film infusion, and toughening veils or medias may be used as a localized interstitial ply. Thus, these interstitial plies may be used as the knit lines for varying resin formulations allowing for through thickness variations on either side and not limited to the localized effect of the interstitial ply itself.

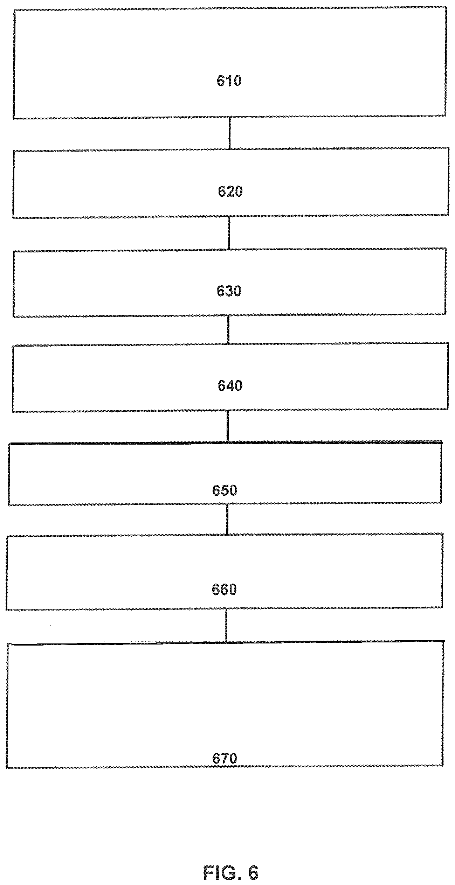

According to various embodiments, and with reference to FIG. 6, fibers may be oriented in a mold 100. This mold 100 may be a VARTM mold (Step 610). Fibers of the ply stack may comprise diffusion media (Step 620). According to various embodiments, a ply made of diffusion media may be oriented/positioned within a stack of plies (Step 620). The plies may be located at preselected positions within the mold 100 for varied composite material characteristics. For instance, in an area where toughness is desired, diffusion media may be located such that that area within the entire mold 100 may have increased toughness. This may reduce overall cost, weight and time to provide composite structures. Moreover, additives added to resin may decrease the flow rate of resin which may make the infusion of toughened resin impractical over the entire formed composite structure. Localized diffusion media to achieve these enhanced material properties may solve this concern. A first resin source (such as resin 5 source) may be coupled to an input, such as input 120 (Step 630). A vacuum may be engaged (Step 640). The pressure created by the vacuum line may draw the resin 5, 20 toward the vacuum line port (Step 650). A reaction may occur dissolving the embedded diffusion media for localizing properties (Step 660). A composite may be formed in a single mold process where a top portion of the part may comprise first material characteristics, a second portion of the part, bottom portion, may comprise second material characteristics, and a transition region, generally between the top portion and the bottom portion may comprise third material characteristics (Step 670).

As mentioned above, the embodiments disclosed herein may be utilized using VARTM, RFI, or Pre-Preg. Resin Film Infusion (RFI) or customized pre-preg could be used by laying up different films throughout the thickness for variations through thickness. The plies may be laid with different films throughout for localized variations. The use of different films with varying properties may be supplemented with transitional films which are created through either creating a third film with properties between the primary two films or by using two layers of film, one layer of each of the two primary films, each of which is half the aerial weight, or other appropriate proportion.

For example, a combined fan case of an engine and nacelle for an aircraft may be manufactured using the processes described herein. Traditionally, the fan case and the inlet/inner barrel of nacelle are two separate components. The fan case being an engine component and the inlet/inner barrel being a nacelle component. These two components are mechanically fastened together and create a surface that has structural, aerodynamic, impact, and acoustic requirements. The requirements for the fan case and the requirements for the inner barrel differ with some of the material characteristics being contradictory. For example, the impact requirements of the fan case usually require a material that can absorb a lot of energy while the inner barrel requires a material which has damage tolerance that is resistant to crack propagation. These requirements would be difficult to achieve in one material system. The process and methods disclosed herein allow a single component to have variable properties both axially and radially to optimize material performance for various areas of the component. The process and methods disclosed herein thus allow a reduced number of components, improved aerodynamics, improved acoustics, and improved damage tolerance for the fan case, while maintaining damage tolerance for the inner barrel.

According to various embodiments, a toughened resin from the forward end of an inlet of a nacelle may be infused in the aft direction, while infusing both untoughened and toughened resins from the aft end of the fan case forward. These toughened and untoughened resins are disposed radially, longitudinally, or a combination of both to create separated bands to restrict crack propagation. These bands allow the fan case to remain predominately designed for energy absorption (one method of this is a matrix which allows delamination and cracking), but additionally has bands for damage tolerance (one method of this is toughened resin), thereby allowing an impact on the fan case to be absorbed. These toughness bands restricts cracks, microcrack and/or delaminations from further growth during spool down and flight.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

## Claims

1. A method of making a composite structure (50), wherein the composite structure (50) defines a longitudinal axis and a radius, the method comprising:
drawing a first resin (5) from a first resin source over a first section (160) of plies of material in a mold (100) by a first vacuum line (170);
drawing a second resin (20) from a second resin source over a second section (150) of plies of material in the mold (100) by the first vacuum line (170); and
drawing a third resin (25) from a third resin source by a second vacuum line substantially concurrently with the second resin (20) being drawn over the second section (150) of plies of material in the mold (100);
curing the first resin (5), the second resin (20) and the third resin (25);
wherein a transition region (15), a first composite material, a second composite material, and a third composite material are formed in response to the curing of the first resin (5), the second resin (20) and the third resin (25);
**characterised in that**:
the third resin (25) is drawn into a subsection of the second section (150) of plies of material in the mold (100) ;
the third resin (25) provides enhanced toughness as compared with the toughness of the second composite material; and
the third resin (25) and the second resin (20) are disposed radially, longitudinally, or a combination of both to create separated bands to restrict crack propagation.

2. The method of making a composite structure of claim 1, wherein the transition region is at least one of located adjacent to a vacuum line (170) location and located between the first composite material and the second composite material.

3. The method of making a composite structure of claim 1 or 2, wherein the transition region, the first composite material and the second composite material each comprise different composite material characteristics.

4. The method of making a composite structure of any preceding claim, wherein a location of the first vacuum line (170) is configured to produce a single knit line of the first resin (5) and the second resin (20).

5. The method of making a composite structure of any preceding claim, wherein a location of the first vacuum line (170) is internal to a stack of plies.

6. The method of making a composite structure of claim 5, wherein the first section (100) of plies is a top section disposed above the first vacuum line (170), and wherein the second section (150) of plies is a bottom section disposed below the first vacuum line (170).

7. The method of making a composite structure of any preceding claim, wherein the transition region, the first composite material and the second composite material are formed in a single vacuum assisted resin transfer molding process.

## Patentansprüche

1. Verfahren zum Herstellen einer Verbundstruktur (50), wobei die Verbundstruktur (50) eine Längsachse und einen Radius definiert, wobei das Verfahren Folgendes umfasst:
Ziehen eines ersten Harzes (5) aus einer ersten Harzquelle über einen ersten Abschnitt (160) von Materiallagen in einem Formwerkzeug (100) durch eine erste Vakuumleitung (170);
Ziehen eines zweiten Harzes (20) aus einer zweiten Harzquelle über einen zweiten Abschnitt (150) von Materiallagen in dem Formwerkzeug (100) durch die erste Vakuumleitung (170); und
Ziehen eines dritten Harzes (25) aus einer dritten Harzquelle durch eine zweite Vakuumleitung im Wesentlichen gleichzeitig dazu, dass das zweite Harz (20) über den zweiten Abschnitt (150) von Materiallagen in dem Formwerkzeug (100) gezogen wird;
Aushärten des ersten Harzes (5), des zweiten Harzes (20) und des dritten Harzes (25);
wobei ein Übergangsbereich (15), ein erstes Verbundmaterial, ein zweites Verbundmaterial und ein drittes Verbundmaterial als Reaktion auf das Aushärten des ersten Harzes (5), des zweiten Harzes (20) und des dritten Harzes (25) gebildet werden;
**dadurch gekennzeichnet, dass**:
das dritte Harz (25) in einen Teilabschnitt des zweiten Abschnitts (150) von Materiallagen in dem Formwerkzeug (100) gezogen wird;
das dritte Harz (25) eine verbesserte Zähigkeit im Vergleich zu der Zähigkeit des zweiten Verbundmaterials bereitstellt; und
das dritte Harz (25) und das zweite Harz (20) radial, längs oder eine Kombination aus beidem angeordnet sind, um getrennte Bänder zu erstellen, um Rissausbreitung einzuschränken.

2. Verfahren zum Herstellen einer Verbundstruktur nach Anspruch 1, wobei der Übergangsbereich mindestens eines von benachbart zu einer Stelle der Vakuumleitung (170) angeordnet und zwischen dem ersten Verbundmaterial und dem zweiten Verbundmaterial angeordnet ist.

3. Verfahren zum Herstellen einer Verbundstruktur nach Anspruch 1 oder 2, wobei der Übergangsbereich, das erste Verbundmaterial und das zweite Verbundmaterial jeweils unterschiedliche Verbundmaterialeigenschaften umfassen.

4. Verfahren zum Herstellen einer Verbundstruktur nach einem der vorhergehenden Ansprüche, wobei eine Stelle der ersten Vakuumleitung (170) dazu konfiguriert ist, eine einzige Bindenaht des ersten Harzes (5) und des zweiten Harzes (20) zu erzeugen.

5. Verfahren zum Herstellen einer Verbundstruktur nach einem der vorhergehenden Ansprüche, wobei eine Stelle der ersten Vakuumleitung (170) im Inneren eines Lagenstapels liegt.

6. Verfahren zum Herstellen einer Verbundstruktur nach Anspruch 5, wobei der erste Abschnitt (100) von Lagen ein oberer Abschnitt ist, der über der ersten Vakuumleitung (170) angeordnet ist, und wobei der zweite Abschnitt (150) von Lagen ein unterer Abschnitt ist, der unter der ersten Vakuumleitung (170) angeordnet ist.

7. Verfahren zum Herstellen einer Verbundstruktur nach einem der vorhergehenden Ansprüche, wobei der Übergangsbereich, das erste Verbundmaterial und das zweite Verbundmaterial in einem einzigen vakuumunterstützten Resin-Transfer-Molding-Prozess gebildet werden.

## Revendications

1. Procédé de fabrication d'une structure composite (50), dans lequel la structure composite (50) définit un axe longitudinal et un rayon, le procédé comprenant :
l'étirement d'une première résine (5) depuis une première source de résine sur une première section (160) de couches de matériau dans un moule (100) par une première ligne de vide (170) ;
l'étirement d'une deuxième résine (20) depuis une deuxième source de résine sur une seconde section (150) de couches de matériau dans le moule (100) par la première ligne de vide (170) ; et
l'étirement d'une troisième résine (25) depuis une troisième source de résine par une seconde ligne de vide sensiblement simultanément avec la deuxième résine (20) étirée sur la seconde section (150) de couches de matériau dans le moule (100) ;
le durcissement de la première résine (5), de la deuxième résine (20) et de la troisième résine (25) ;
dans lequel une région de transition (15), un premier matériau composite, un deuxième matériau composite et un troisième matériau composite sont formés en réponse au durcissement de la première résine (5), de la deuxième résine (20) et de la troisième résine (25) ;
**caractérisé en ce que** :
la troisième résine (25) est étirée dans une sous-section de la seconde section (150) de couches de matériau dans le moule (100) ;
la troisième résine (25) offre une ténacité améliorée par rapport à la ténacité du deuxième matériau composite ; et
la troisième résine (25) et la deuxième résine (20) sont disposées radialement, longitudinalement ou une combinaison des deux pour créer des bandes séparées afin de limiter la propagation des fissures.

2. Procédé de fabrication d'une structure composite selon la revendication 1, dans lequel la région de transition est au moins l'une d'une région située de manière adjacente à un emplacement de ligne de vide (170) et d'une région située entre le premier matériau composite et le deuxième matériau composite.

3. Procédé de fabrication d'une structure composite selon la revendication 1 ou 2, dans lequel la région de transition, le premier matériau composite et le deuxième matériau composite comprennent chacun des caractéristiques de matériau composite différentes.

4. Procédé de fabrication d'une structure composite selon une quelconque revendication précédente, dans lequel un emplacement de la première ligne de vide (170) est configuré pour produire une ligne de soudure unique de la première résine (5) et de la deuxième résine (20).

5. Procédé de fabrication d'une structure composite selon une quelconque revendication précédente, dans lequel un emplacement de la première ligne de vide (170) est interne à une pile de couches.

6. Procédé de fabrication d'une structure composite selon la revendication 5, dans lequel la première section (100) de couches est une section supérieure disposée au-dessus de la première ligne de vide (170), et dans lequel la seconde section (150) de couches est une section inférieure disposée en dessous de la première ligne de vide (170).

7. Procédé de fabrication d'une structure composite selon une quelconque revendication précédente, dans lequel la région de transition, le premier matériau composite et le deuxième matériau composite sont formés dans un processus unique de moulage par transfert de résine assisté par vide.
